# EUROPEAN PATENT APPLICATION

(11) **EP 2 124 142 A1**
(43) Date of publication of application: **25.11.2009**
(21) Application number: 08710993.0
(22) Date of filing: 08.02.2008
(51) Int. Cl.: G06F 3/048, G06F 9/44

(54) **USER INTERFACE GENERATOR, INFORMATION TERMINAL, USER INTERFACE GENERATION CONTROL PROGRAM, RECORDING MEDIUM, AND USER INTERFACE GENERATION METHOD**

(30) Priority: 16.02.2007 JP 2007037174
(71) Applicant: Sharp Kabushiki Kaisha, Osaka-shi Osaka 545-8522 (JP)
(72) Inventor: YAGI, Ryouta, Osaka 545-8522 (JP); TERADA, Satoshi, Osaka 545-8522 (JP); ITOH, Megumi, Osaka 545-8522 (JP)
(74) Representative: Müller - Hoffmann & Partner
(86) International application number: PCT/JP2008/052114
(87) International publication number: WO 2008/099776

(57) **Abstract**

A user interface generator of generating a user interface from user interface template data for execution comprises a UI template selecting section (20) for selecting the user interface template data from service description data describing service that the user utilizes and terminal data expressing the state of a terminal device that the user utilizes and a UI description generating section (50) for generating the user interface from the service description data and the user interface template data selected by the UI template selecting section (20). This provides a method for using a template to flexibly generate a user interface and a user interface generator using the same.

## Description

### Technical Field

The present invention relates to a technique for generating a user interface that a user utilizes for using functions of an appliance or services provided via the Internet. More specifically, the present invention relates to a technique for generating a user interface from a template.

### Background Art

A user interface, which is an information presentation scheme and a data input scheme, is utilized by a user for using functions of information appliances such as a mobile phone, a mobile terminal (e.g., PDA [Personal Digital Assistant]), a digital television receiver, and a hard disc recorder, and the user interface has been conventionally realized by special software.

In recent years, along with diversification of such information appliances, in order to reduce software development processes, such a user interface has been generated by use of a standard data format of XML (eXtencislbe Markup Language), such as XHTML (eXtensible Hyper Text Markup Language), SVG (Scalable Vector Graphics), and SMIL (Synchronized Multimedia Integration Language). Hereinafter, one described by the standard data format to generate a user interface is referred to as user interface description, abbreviated as UI description.

Further, there has become known a technique for realizing the UI description by browser software adaptable to the standard data format, which can be mutually used between information appliances.

As such a technique, Patent Literature 1 discloses a technique for generating a user interface by use of a template of UI description.

The technique disclosed in Patent Literature 1 is for adding a title(s) to an image(s) captured by a digital camera, generating a slide show of the image(s), laying out the image(s), and the like. In the technique, in a case where captured images are arranged in a desired layout and outputted, a mode is changed into an album generation mode by a mode change switch. The user selects a desired template from templates that are stored in a recoding medium in advance, and selects images to be inserted into the template from images stored in a storage section. The template thus selected is described in SVG and includes <image> elements, the number of which corresponds to the number of the images to be inserted into the template. File names of pieces of image data selected by a control section are inserted into the <image> elements and then inserted into the storage medium. As such, the layout can be carried out. The slide show generation and the title addition can be also carried out by the camera itself in such a manner that a SVG template is prepared and file names of pieces of image data are embedded into the template.

However, the technique disclosed in Patent Literature 1 has such a problem that the maximum number of images to be embedded into a template is limited to the number of <image> elements included in the template.

As a technique for solving the problem, Patent Literature 2 discloses a technique in which a region to be repeatedly used is provided in a part of a template, and the number of repeated use of the region is changed depending on the number of specified user images. The technique allows the same template to be used even if the number of images is different from that of the template.

The technique disclosed in Patent Literature 2 is such that an album is generated by inserting user images into an album template constituted by a plurality of pages. In this technique, a data structure of the album template that designates a multiple-page layout includes: a plurality of page template regions in each of which a page template that specifies a one-page layout having at least one insertion region is recorded; a link-specifying region in which link information that comprehensively specifies a plurality of user images to be inserted, in a predetermined order, into insertion regions of a plurality of page templates is recorded; and a repeat-specifying region in which repeat information that specifies a page template repeatedly used during displaying in accordance with the number of the user images comprehensively specified by the link information, is recorded.

With the data structure of the album template, it is possible to comprehensively specify, by the link information, a plurality of user images to be inserted into the insertion regions of the plurality of page templates, without specifying user images with respect to each page. Here, "to comprehensively specify" means to specify a plurality of user images with respect to a section containing a plurality of page templates, not with respect to individual page templates. Further, even if the number of user images to be comprehensively specified is changed, the number of repeated use of a page template is determined according to the number of user images specified when the user images are to be displayed. For this reason, it is not necessary to respecify the user images with respect to the page templates. As such, the data structure of the album template disclosed in Patent Literature 2 can reduce processes required for generating an album with the use of the album template.

When the user selects an album template and designates a folder in which user images are stored or a plurality of user images so that the user images are comprehensively specified, comprehensively specified link information is caused to correlate to a section including page templates one-on-one so that the link information is set as a link-specifying region. An output section repeatedly uses the page templates contained in the section in accordance with the number of the user images of the comprehensively specified link information, so as to reproduce a plurality of page templates each designating a specific one-page layout. Herewith, a completed album template is generated. This arrangement allows generating an album template including the number of pages corresponding to the number of the user images.

### Citation List

Patent Literature 1
   Japanese Patent Application Publication, Tokukai, No. 2005-176216 A (Publication Date: June 30, 2005)
Patent Literature 2
   Japanese Patent Application Publication, Tokukai, No. 2005-242836 A (Publication Date: September 8, 2005)

### Summary of Invention

However, in the technique disclosed in Patent Literature 2, the template to be used cannot be changed depending on the number of the user images. For example, in a case where 13 images are displayed by use of a page template into which 12 images are to be embedded per page, just one image among the 13 images is inserted into a second page of the user interface, with the result in that remaining 11 parts out of 12 image-insertion parts on the second page are blank. In this case, it is difficult to generate a preferable user interface by additionally inserting other images into the blank parts or replacing the page template with a page template into which 8 images are embedded per page so as to decrease the blank parts on the second page to make a good appearance.

Further, in the technique disclosed in Patent Literature 2, it is necessary for the user to expressly select which template is to be used. For example, it is difficult to automatically select a template suited to a vertical or horizontal layout in accordance with whether a layout to be outputted on a user interface is portrait or landscape.

The present invention is accomplished in view of the above problems. An object of the present invention is to provide (i) a method for flexibly generating a user interface by use of a template and (ii) a user interface generator employing the method.

To flexibly generate a user interface indicates (i) to change a template to be used, in accordance with a situation of an apparatus used by a user, (ii) to change a template to be used, in accordance with the number of pieces of data to be embedded into the template, or (iii) to obtain second data to be embedded into a template, in accordance with the number of the pieces of data to be embedded into the template.
(1) In order to achieve the object, a user interface generator according to the present invention is a user interface generator that generates a user interface from a piece of user interface template data and executes the user interface, and includes: selecting means for selecting a piece of user interface template data based on a piece of service description data describing a service(s) to be utilized by a user and terminal data indicative of a state of a terminal device that the user utilizes; and user interface generating means for generating a user interface based on the piece of service description data and the piece of user interface template data thus selected by the selecting means.
   In the arrangement, the selecting means determines which piece of user interface template data allows generating an optimal user interface, based on content of a piece of service description data, which content is to be presented as the user interface, and terminal data indicative of a state of the terminal device in which state the user interface is to be displayed. The user interface generating means generates a user interface based on a piece of user interface template data that is determined optimal by the selecting means.
   For example, in a case where the terminal data indicates that the terminal device is in a portrait display mode and an "Internet browse" service and a "mail browse" service are described in a piece of service description data, the selecting means selects a piece of user interface template data which exhibits a portrait orientation and into which two icons can be embedded. The user interface generating means then embeds text strings of "Internet browse" and "mail browse" and the like into the piece of user interface template data thus selected, so as to generate a user interface. The user selects an icon for selecting a service displayed on a portrait screen of the terminal device by referring to the text strings displayed on the portrait screen. Then, the service related to the icon that the user selected is processed.
   The user interface generator may be included in the terminal device or in an external section of the terminal device.
   With the arrangement, since the piece of user interface template data is selected based on the content of the piece of service description data and the state of the terminal device, it is advantageously possible to generate a user interface suitable to the content of the piece of service description data and the state of the terminal device.
(2) In addition to the above arrangement, the user interface generator of the present invention further includes: communication means for communicating with an outside; and service description data acquisition means for acquiring the piece of service description data via the communication means, the selecting means and the user interface generating means operating based on the piece of service description data thus acquired by the service description data acquisition means.
   With the arrangement, the selecting means and the user interface generating means operate based on a piece of service description data acquired from the outside via the communication means, thereby allowing the user interface generator to utilize various pieces of service description data.
(3) In addition to the above arrangement, the user interface generator of the present invention further includes: communication means for communicating with an outside; and user interface template data acquisition means for acquiring the piece of user interface template via the communication means, the user interface generating means acquiring the piece of user interface template data from the user interface template data acquisition means.
   With the arrangement, the user interface generating means acquires the piece of user interface template data from the outside via the communication means, thereby allowing the user interface generator to utilize various pieces of user interface template data.
(4) In addition to the above arrangement, in the user interface generator of the present invention, the piece of service description data contains information on the number of the service(s) and the selecting means selects a corresponding piece of user interface template data based on the information on the number of the service(s).
   In the arrangement, the selecting means determines which piece of user interface template data allows generating an optimal user interface, based on the number of services to be presented on the user interface as content of a piece of service description data, which content is to be presented as the user interface.
   With the arrangement, a corresponding piece of user interface template data is selected based on the number of services described in a piece of service description data, thereby resulting in that a user interface most suited to the number of services to be presented can be successfully generated.
(5) In addition to the above arrangement, in the user interface generator of the present invention, the terminal data contains display state information of a screen on which the user interface is to be displayed, and the selecting means selects a corresponding piece of user interface template data based on the display state information.
   In the arrangement, the selecting means determines which piece of user interface template data allows generating an optimal user interface, based on the display state information of the screen on which the user interface is to be displayed, as the terminal data indicative of the state of the terminal device at the time the user interface is to be displayed. The display state information is, for example, information on whether the screen of the terminal device is landscape or portrait. The selecting means selects a user interface having a layout most suited to the screen in accordance with the information on whether the screen is landscape or portrait.
   With the arrangement, since a corresponding piece of user interface template data is selected based on the display state information, it is advantageously possible to generate a user interface most suited to the display state of the terminal device.
(6) In addition to the above arrangement, in the user interface generator of the present invention, the display state information includes an aspect ratio of the screen and an orientation of the screen.
   In the arrangement, for example, the selecting means regards the screen as a landscape screen when the aspect ratio of the screen is 9:16, 3:4, or 3:5. Meanwhile, the selecting means regards the screen as a portrait screen when the aspect ratio is 16:9, 4:3, or 5:3. Further, the selecting means detects inclination of the screen to determine a downward orientation of the screen and selects a corresponding piece of user interface template data that has an optimal layout for the screen. With the arrangement, since a corresponding piece of user interface template data is selected based on the aspect ratio of the screen and the orientation of the screen, it is advantageously possible to generate a user interface most suited to the aspect ratio of the screen and the orientation of the screen.
(7) In addition to the above arrangement, the user interface generator of the present invention further includes input means for receiving an input of a user operation by changing how to receive the input of the user operation, depending on an input mode, the terminal data containing information on the input mode.
   In the arrangement, the selecting means determines which piece of user interface template data allows generating an optimal user interface based on the input mode of the input means for receiving the input of the user operation. The input mode may be, for example, an unfolded state in which a retractable keyboard is unfolded and a housed state in which the retractable keyboard is housed.
   With the arrangement, since a corresponding piece of user interface template data is selected based on the input mode, it is advantageously possible to generate a user interface most suited to the input mode of the input means.
(8) In addition to the above arrangement, in the user interface generator of the present invention, in a case where the input mode is a key-input mode in which the user operation is carried out via a key input, the selecting means selects a corresponding piece of user interface template data that forms a user interface that additionally presents a screen display that is helpful for the user to select a service via the key input.
   With the arrangement, in the case where the input mode is a key-input mode in which the user operation is carried out via a key input, a screen display (for example, a focus frame) that is helpful for the user to select a service via the key input is additionally presented, thereby successfully improving a user's operation performance.
(9) In addition to the above arrangement, in the user interface generator of the present invention, the service description data contains information on a type(s) of the service(s).
   In the arrangement, the selecting means determines which piece of user interface template data allows generating an optimal user interface, based on the type(s) of the service(s) to be presented when the user interface is displayed.
   With the arrangement, since a corresponding piece of user interface template data is selected based on the type(s) of the service(s) described in the service description data, it is possible to generate a user interface most suited to the type(s) of the service(s) to be presented.
(10) In addition to the above arrangement, in the user interface generator of the present invention, in a case where a presentation unit for presenting the service(s) on a user interface is a page unit, the selecting means selects a corresponding piece of user interface template data that forms a user interface including the number of pages that allows presenting all the service(s) thereon.
   With the arrangement, in the case where a presentation unit for presenting the service(s) on a user interface is a page unit, a corresponding piece of user interface template data that forms a user interface having the number of pages that allows presenting all the service(s) thereon, with the result that the user can select any of the service(s) by changing pages.
(11) In addition to the above arrangement, the user interface generator of the present invention, in a case of using a user interface that changes, in response to a user input, which service(s), among the service(s) described in the piece of service description data, is/are to be displayed on the screen, the selecting means selects a corresponding piece of user interface template data that forms a user interface that designates a suitable presentation position of each service to be displayed on the screen, in accordance with the information on the number of the service(s).
   In the arrangement, to change, in response to a user input, which service(s) is/are to be displayed on the screen is as follows, for example. That is, in a case where all icons each related to each service cannot be simultaneously displayed on the screen, the icons are sequentially scrolled so that the user observes all the icons.
   With the arrangement, a piece of user interface template data in which a presentation position of each service to be presented is appropriately adjusted in accordance with the number of the service(s). On this account, even in a case where the number of the service(s) is changed, it is advantageously possible that the user changes icons (e.g., by scrolling the icons) through the user input (e.g., pressing a cursor key), so that each service is displayed on a preferable position.
(12) In addition to the above arrangement, in the user interface generator of the present invention, the piece of service description data further contains an explanation(s) about the service(s), and in a case where the number of the service(s) contained in the service description data is not more than a predetermined number, the selecting means selects a corresponding piece of user interface template data that forms a user interface that is capable of presenting the explanation(s).
   Wit the arrangement, in a case where the number of the service(s) is not more than a predetermined number, a corresponding piece of user interface template data that forms a user interface that can present an explanation(s) about the service(s) on a blank portion on the user interface. This results in that a blank portion on the user interface can be efficiently used.
(13) In addition to the above arrangement, in the user interface generator of the present invention, in a case where the number of the service(s) contained in the piece of service description data is not more than a predetermined number, the selecting means acquires a second piece of service description data and the selecting means selects a corresponding piece of user interface template data that forms a user interface that is capable of presenting the service(s) described in the piece of service description data, and a service(s) described in the second piece of service description data.
   With the arrangement, in the case where the number of the service(s) contained in the piece of service description data is not more than a predetermined number, a corresponding piece of user interface template data that forms a user interface that can present content of the second piece of service description data on a blank portion on the user interface is selected. As a result, it is possible to efficiently and flexibly use a blank potion on the user interface.
(14) In addition to the above arrangement, in the user interface generator of the present invention, the service description data further contains a reference of icon data related to each of the service(s), and the selecting means selects a corresponding piece of user interface template data in accordance with a width and a height of the icon data referred from the service description data.
   With the arrangement, since a corresponding piece of user interface template data is selected in accordance with a width and a height of icon image data related to each service, it is advantageously possible to generate a user interface that displays each icon image with an appropriate size.
(15) In addition to the above arrangement, in the user interface generator of the present invention, the selecting means selects a corresponding piece of user interface template data in accordance with a length of each text string contained in the piece of service description data.
   With the arrangement, a corresponding piece of user interface template data is selected in accordance with a length of each text string contained in the piece of service description data. As a result, it is advantageously possible to generate a user interface that displays the each text string contained in the piece of service description data in an appropriate form.

In addition to the above arrangement, the user interface generator of the present invention further includes package acquisition means for (i) receiving package data via the communication means, the package data containing a piece of user interface template data and a piece(s) of icon data referred from the piece of user interface template data, and for (ii) extracting the piece of user interface template data and the piece(s) of icon data from the package data.

With the arrangement, a piece of user interface template data and a piece(s) of icon data can be dealt with as a package, thereby resulting in that the piece of user interface template data and the piece(s) of icon data are easily dealt with in a server side that provides the package and a user interface generator side.

On the other hand, in order to achieve the above object, a user interface generation method of the present invention is a method for generating a user interface from a piece of user interface template data and for executing the user interface thus generated, and the method includes: selecting means selecting a piece of user interface template data based on a piece of service description data describing a service(s) to be utilized by a user and terminal data indicative of a state of a terminal device that the user utilizes; and user interface generating means generating a user interface based on the piece of service description data and the piece of user interface template data selected in the step of selecting.

In the arrangement, similarly to the user interface generator of the present invention, the selecting means determines which piece of user interface template data allows generating an optimal user interface, based on content of a piece of service description data, which content is to be presented as a user interface, and terminal data indicative of a state of the terminal device at the time when the user interface is to be presented. Then, the user interface generating means generates a user interface based on a piece of user interface template data that is determined optimal.

With the arrangement, since a corresponding piece of user interface template data is selected based on the content of the piece of service description data and the state of the terminal device, it is advantageously possible to generate a user interface most suited to the content of the piece of service description data and the state of the terminal device.

The user interface generator may be realized by hardware or by causing a computer to execute a program. More specifically, a user interface generation control program of the present invention is for causing a computer to function as at least the aforementioned selecting means and user interface generating means, and a storage medium of the present invention is one in which the user interface generation control program is stored.

When a computer executes the user interface generation control program, the computer works as the user interface generator. As a result, similarly to the aforementioned user interface generator, a corresponding piece of user interface template data is selected based on content of a piece of service description data and a state of a terminal device. Consequently, it is advantageously possible to generate a user interface most suited to the content of the piece of service description data and the state of the terminal device.

In the user interface generator of the present invention, the input means may include text input means and a corresponding piece of user interface template data may be selected based on whether or not the text input means is usable.

The user interface generator of the present invention may includes: service data acquisition means; terminal data acquisition means; user interface template data acquisition means (a user interface template accumulating section); selecting means for selecting a piece of user interface template data based on a piece of service description data and terminal data; and user interface generating means for generating a user interface based on the piece of user interface template data thus selected by the selecting means and the piece of service description data.

Further, the user interface generator of the present invention may further includes communication means to acquire data via the Internet, and the service description data acquisition means may acquire a piece of service description data via the communication means.

The user interface generator of the present invention may further include communication means to acquire data via the Internet, and the user interface generating means may acquire a piece of user interface template data that is selected via the Internet.

In the user interface generator of the present invention, the selecting means may select a corresponding piece of user interface template data based on the number of services described in the piece of service description data.

The user interface generator of the present invention may further include display means for displaying a user interface, the terminal data may contains screen display mode information indicative of a screen display state, and the selecting means may select a corresponding piece of user interface template data based on the screen display mode information.

The user interface generator of the present invention may be arranged such that the screen display mode further contains information on an orientation of a screen display.

The user interface generator of the present invention may further include input means and the terminal data may contain input mode information of the input means so that the selecting means may select a corresponding piece of user interface template data, based on the piece of input mode information.

The user interface generator of the present invention may include text input means so that a corresponding piece of user interface template data may be selected based on whether the text input means is usable or not.

In the user interface generator of the present invention, in a case where the text input means is usable, the selecting means may select a corresponding piece of user interface template data that presents a focus frame that allows the user to select a service and a function by manipulating the text input means.

In the user interface generator of the present invention, a piece of service description data may further contain descriptions about types of a series of services and functions, and the selecting means may select a corresponding piece of user interface template data based on the types contained in the piece of service description data.

The user interface generator of the present invention may be arranged such that a piece of user interface template data generates a user interface that presents information to the user by a page unit that is a presentation unit of information and the selecting means selects a corresponding piece of user interface template data that generates a user interface having sufficient pages to present all the series of services and functions contained in the piece of service description data.

The user interface generator of the present invention may be arranged such that a piece of user interface template data generates a user interface in which presentation positions of the services and functions are sequentially changed in response to a selecting operation of the user and the selecting means selects a corresponding piece of user interface template data that generates a user interface that presents the services and functions at respective appropriate presentation positions which accord with the number of the series of the services and functions contained in the piece of service description data.

The user interface generator of the present invention may be arranged such that the piece of service description data further contains explanation descriptions about a series of services and functions to be available and in a case where the number of the series of services and functions contained in the piece of service description data is not more than a predetermined number, the selecting means selects a corresponding piece of user interface template data that generates a user interface that presents the explanation descriptions.

The user interface generator of the present invention may be arranged such that, in a case where the number of a series of services and functions contained in a first piece of service description data is not more than a predetermined number, the selecting means acquires a second piece of service description data via the service description data acquisition means, and the selecting means selects a corresponding piece of user interface template data that generates a user interface that presents the series of services and functions contained in the first piece of service description data and a series of services and functions contained in the second piece of service description data.

The user interface generator of the present invention may further include package-managing means for receiving, via the communication means, package data containing a piece of user interface template data and icon data referred from the piece of user interface template data, and for uncompressing the package data.

An information terminal of the present invention may include the aforementioned user interface generator.

Additional objects, features, and strengths of the present invention will be made clear by the description below. Further, the advantages of the present invention will be evident from the following explanation in reference to the drawings.

### Brief Description of Drawings

Fig. 1

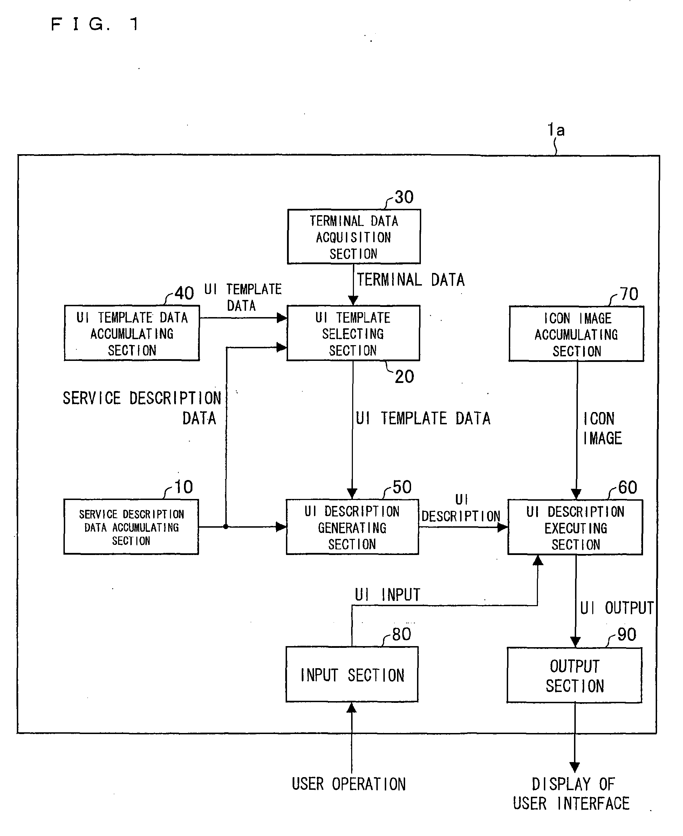

   Fig. 1 is a functional block diagram of a mobile terminal having no communication function, according to a first embodiment.
Fig. 2

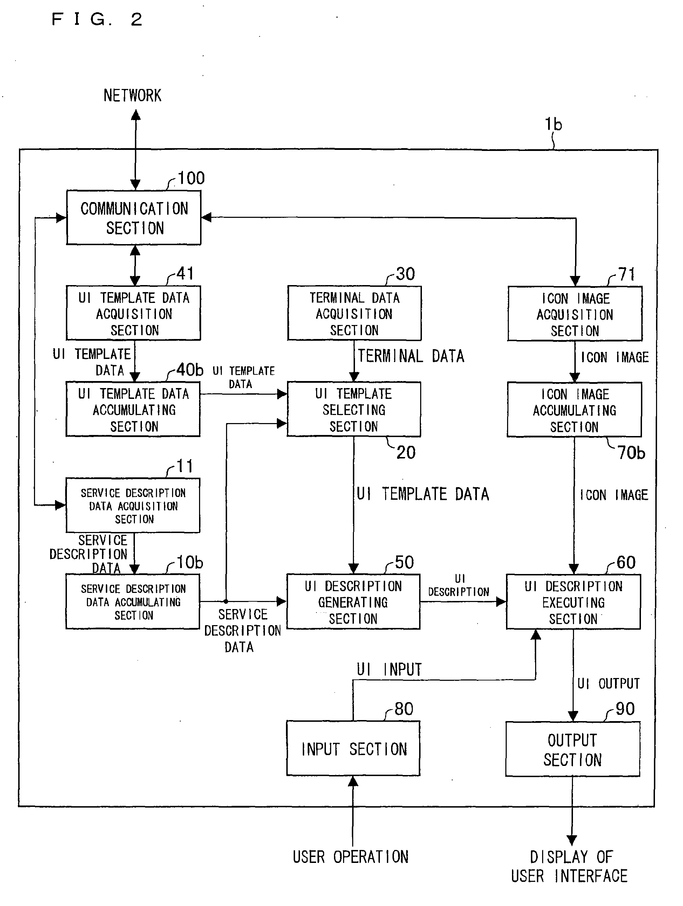

   Fig. 2 is a functional block diagram of a mobile terminal having a communication function, according to the first embodiment.
Fig. 3

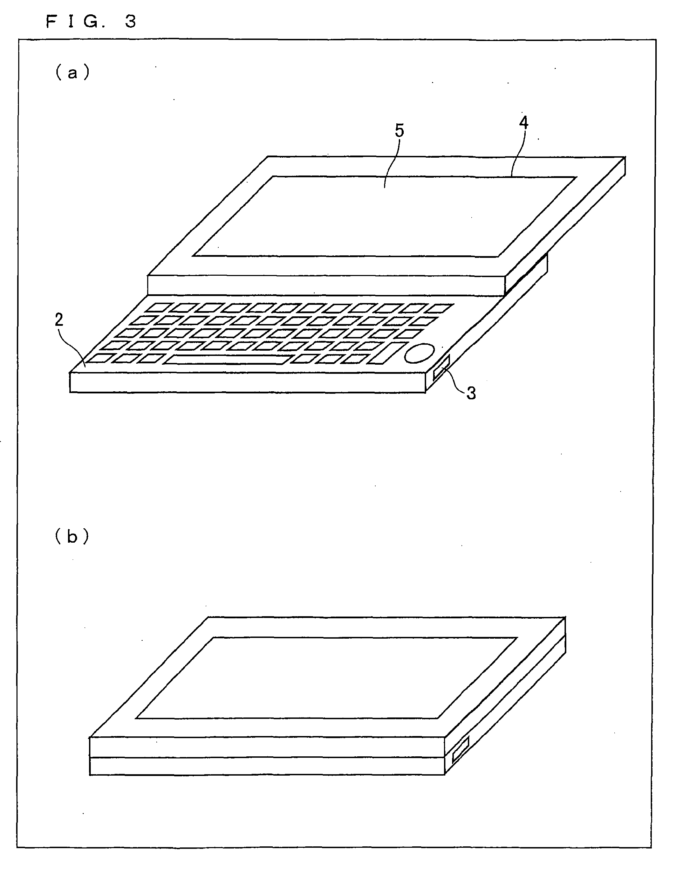

   Fig. 3 schematically illustrates an exemplary appearance of a mobile terminal.
Fig. 4

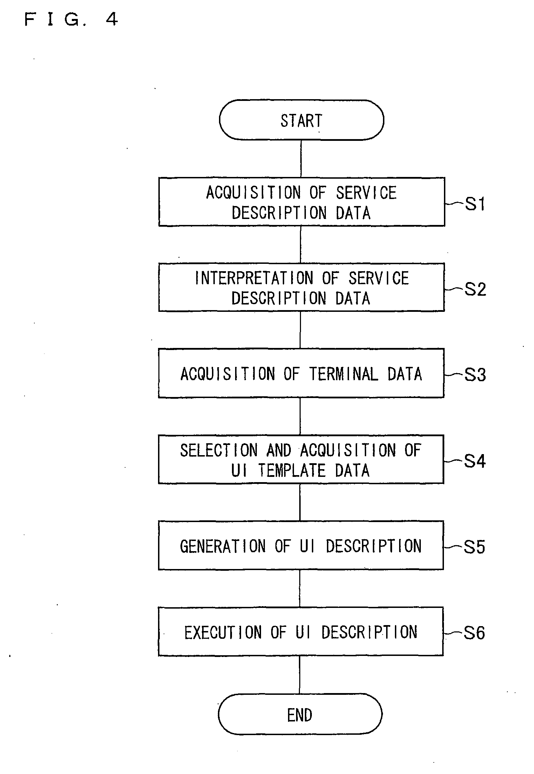

   Fig. 4 is a flowchart of a process procedure in the first embodiment until the mobile terminal selects UI template data, generates a UI description, and executes the UI description.
Fig. 5

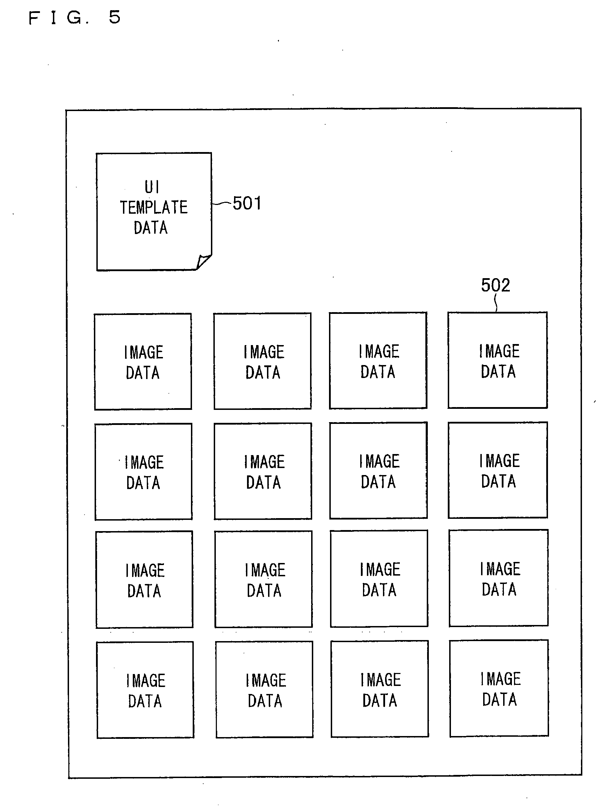

   Fig. 5 schematically illustrates an exemplary package of UI template data and icon image data.
Fig. 6

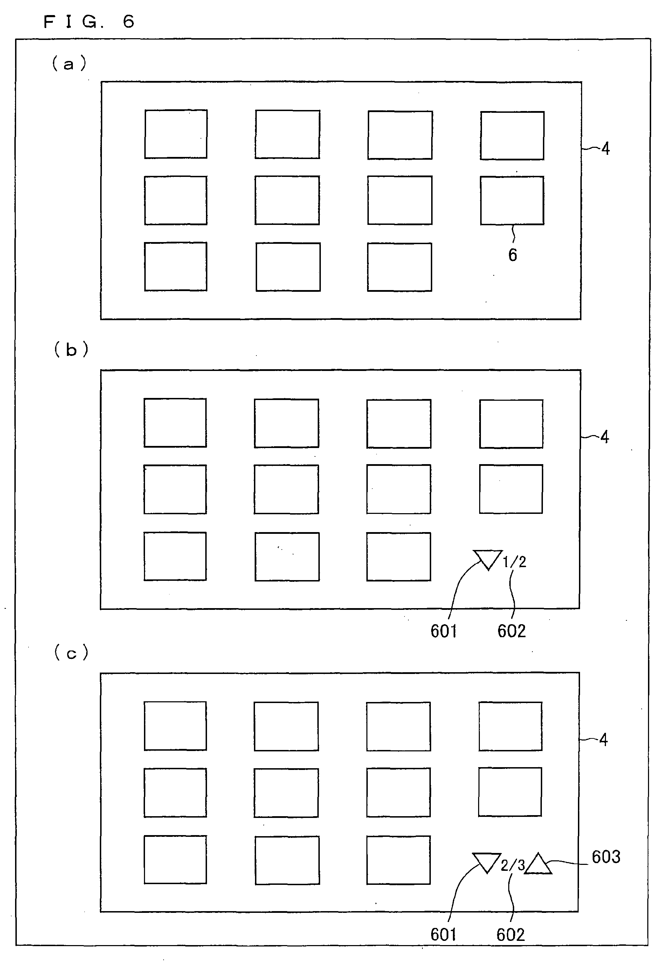

   Fig. 6 illustrates examples of a screen display of a grid type interface. (a) of Fig. 6 illustrates an exemplary display in which the number of applications described in service description data is 10, (b) of Fig. 6 illustrates an exemplary display in which the number of applications described in service description data is 15, and (c) of Fig. 6 illustrates an exemplary display in which the number of applications described in service description data is 26.

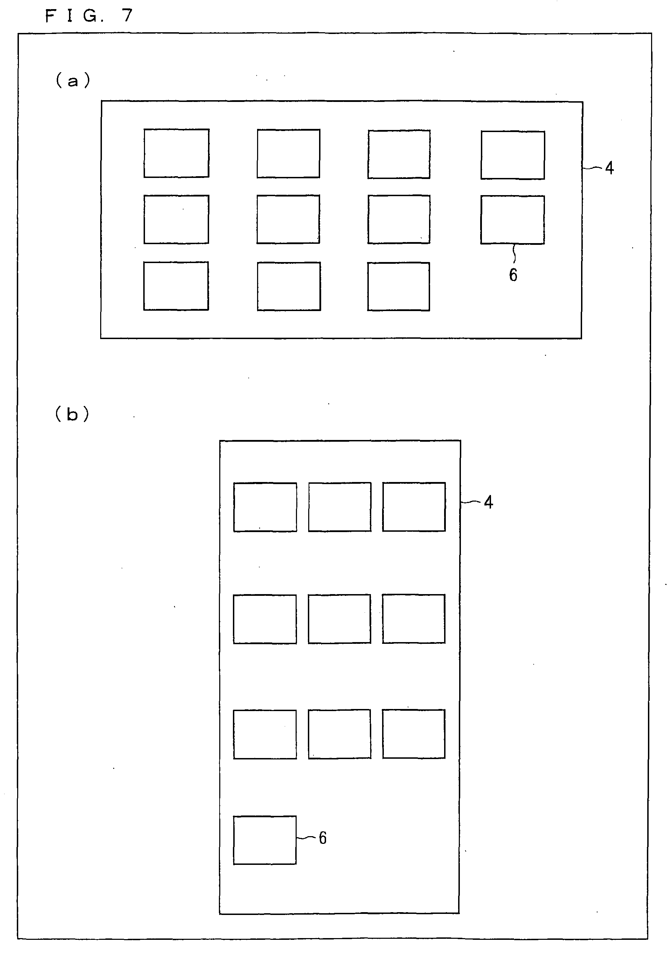

Fig. 7 illustrates examples of a screen display of a grid type interface. (a) of Fig. 7 is an exemplary display in which terminal data indicates that a screen display is carried out such that an aspect ratio of a screen is, for example, 9:16, that is, a landscape screen display is carried out, and (b) of Fig. 7 is an exemplary display in which terminal data indicates that a screen display is carried out such that an aspect ratio of a screen is, for example, 16:9, that is, a portrait screen display is carried out.
Fig. 8

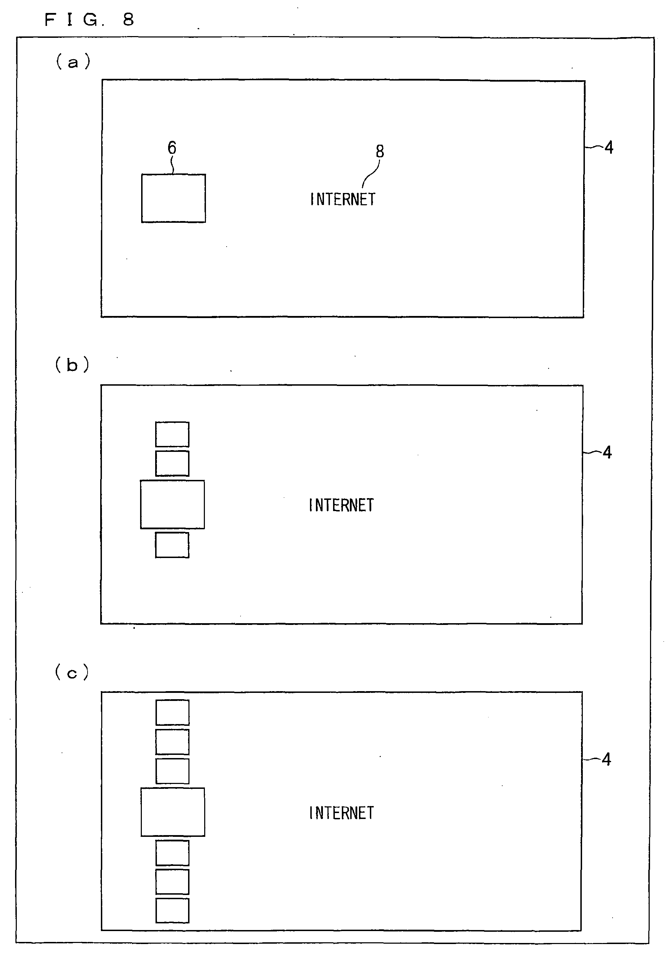

   Fig. 8 illustrates examples of a screen display of a scroll type interface. (a) of Fig. 8 illustrates an exemplary display in which the number of services described in service description data is 1, (b) of Fig. 8 illustrates an exemplary display in which the number of services described in service description data is 4, and (c) of Fig. 8 illustrates an exemplary display in which the number of services described in service description data is 15.
Fig. 9

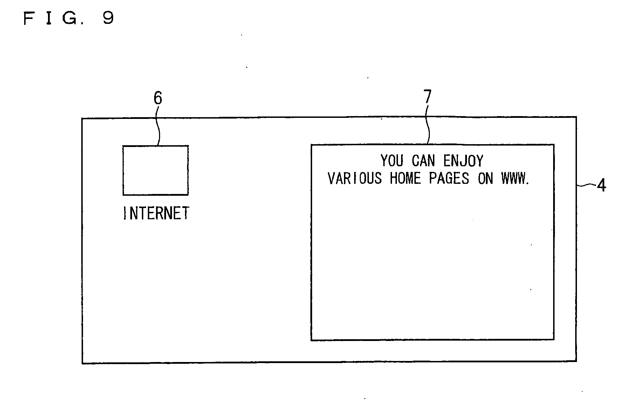

   Fig. 9 illustrates an exemplary screen display of a grid type interface, and additional information is displayed on the screen.
Fig. 10

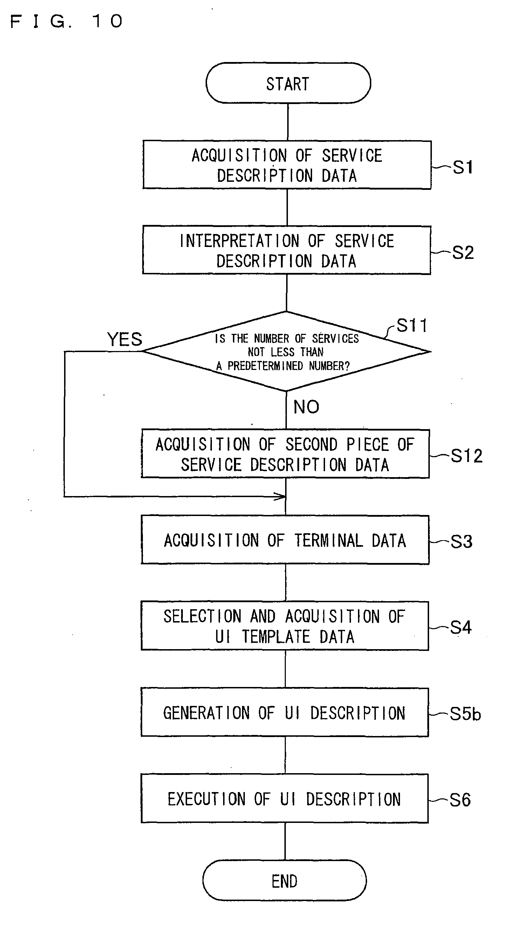

   Fig. 10 is a flowchart of a process procedure in a second embodiment until a mobile terminal selects UI template data, generates a UI description, and executes the UI description.
Fig. 11

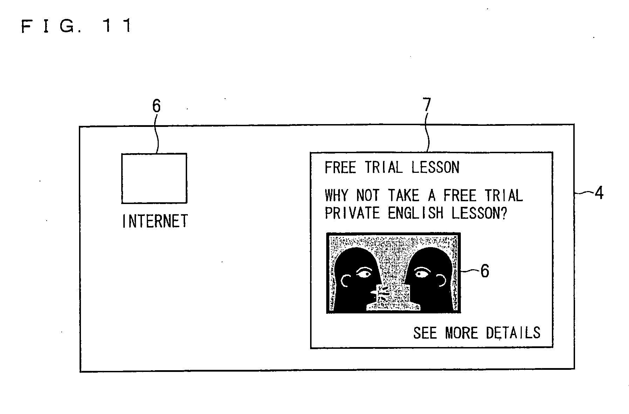

   Fig. 11 illustrates an exemplary screen display of a grid type interface of the second embodiment, and information described in a second piece of service description data is displayed on the screen.
Fig. 12

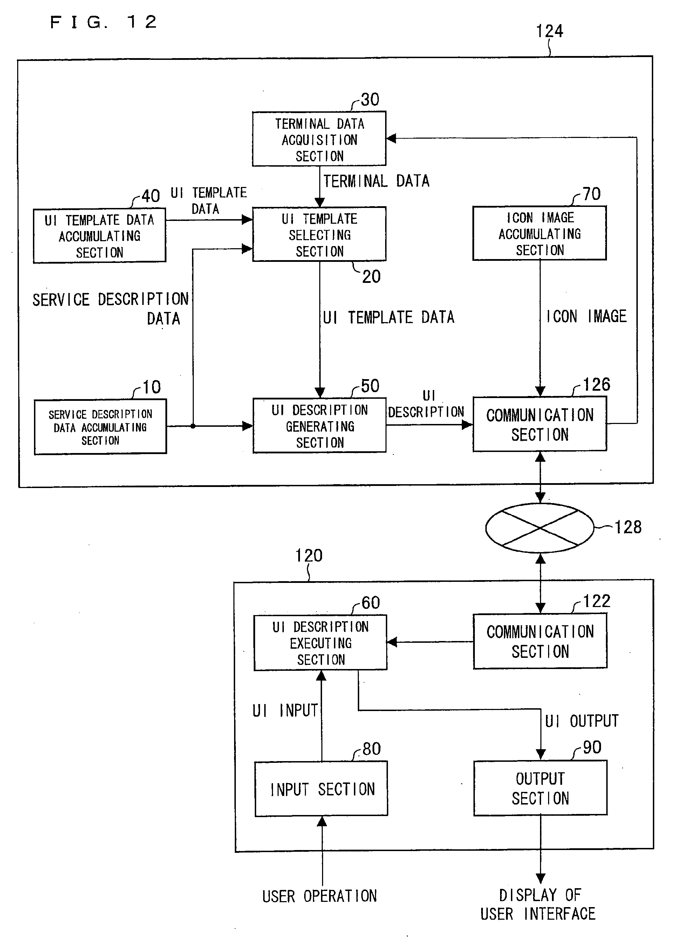

   Fig. 12 is a functional block diagram including a mobile terminal and a user interface-generating server.

### Reference Signs List

1a, 1b: Mobile Terminal (User Interface Generator)
2: Keyboard (Input Means)
3: Display Orientation Change Key
4: Screen
5: Touch Screen (Input Means)
6: Icon
7: Additional Information Display Region
8: Service Name
10, 10b: Service Description Data Accumulating Section
11: Service Description Data Acquisition Section (Service Description Data Acquisition Means)
20: UI Template Selecting Section (Selecting Means)
30: Terminal Data Acquisition Section
40, 40b: UI Template Data Accumulating Section
41: UI Template Data Acquisition Section (User Interface Template Data Acquisition Means)
50: UI Description Generating Section (User Interface Generating Means)
60: UI Description Executing Section
70, 70b: Icon Image Accumulating Section
71: Icon Image Acquisition Section
80: Input Section (Input Means)
90: Output Section
100: Communication Section (Communication Means)
120: Mobile Terminal
122: Communication Section
124: User Interface-Generating Server (User Interface Generator)
126: Communication Section
128: Internet
501: UI Template Data
502: Image Data

### Description of Embodiments

### [First Embodiment]

The present embodiment describes one embodiment of a user interface generator, taking, as an example, a mobile terminal in which a template for generating a user interface is changed in accordance with a state of the terminal, the number of terminal functions described in service description data (explained later), and the like.

### <UI Template Data>

UI template data indicates data for generating UI description according to a standard data format such as SVG or HTML, by embedding a still image or a text string in part of the data.

### <Service>

Service indicates a processing result to be provided from a mobile terminal when a user carries out an operation with respect to a user interface. Examples of the service encompass various functions included in the mobile terminal and a processing result with respect to a process requested to a server or the like on the Internet via a network.

### <Service Description Data>

Service description data indicates data in which a list of services to be utilized by a user by operating a mobile terminal is stored. Functions to be utilized by the user include functions of the mobile terminal itself and functions realized by a service provided via the Internet. In the service description data, not only a service identifier that identifies a service, but also an icon image identifier that identifies an icon image to be displayed on a user interface screen so that the user can designate the service, a title text string for the service, a text string for a detailed explanation of the service, and the like are stored.

### <Terminal Data>

Terminal data indicates data indicative of a current state of a mobile terminal that the user utilizes. The terminal data includes an input mode, a screen display mode, a volume level of a speaker, and the like in the mobile terminal. More specifically, the terminal data includes: a usage state of a hardware keyboard contained in the mobile terminal (for example, whether or not a keyboard is housed); an orientation of a screen display (for example, whether a usage mode is a portrait mode or a landscape mode); information on whether a speaker volume is muted or not, and the like information.

### <Arrangement of Mobile Terminal (No External Data Acquisition>

Fig. 1 is a functional block diagram of a mobile terminal 1a according to the present embodiment. The mobile terminal 1a is arranged so as not to carry out data acquisition from an outside via a network.

The mobile terminal 1a includes: a service description data accumulating section 10; a UI template selecting section 20 (selecting means); a terminal data acquisition section 30; a UI template data accumulating section 40; a UI description generating section 50 (user interface generating means); a UI description executing section 60; an icon image accumulating section 70; an input section 80 (input means); and an output section 90.

The service description data accumulating section 10 accumulates pieces of service description data in advance, each describing a service(s) provided by the mobile terminal 1a, and supplies a piece of service description data to the UI template selecting section 20 and the UI description generating section 50.

The UI template selecting section 20 analyzes the piece of service description data received from the service description data accumulating section 10 and terminal data received from the terminal data acquisition section 30, and selects a most suitable UI template to be presented to a user, based on a type(s) of the service(s), the number of the service(s) contained in the piece of service description data, and a state of the mobile terminal 1a at the time. Then, the UI template selecting section 20 acquires a corresponding piece of UI template data of the UI template thus selected, from the UI template data accumulating section 40 and supplies the corresponding piece of UI template data to the UI description generating section 50.

The terminal data acquisition section 30 acquires a state of the mobile terminal 1a occasionally, and supplies the state to the UI template selecting section 20.

The UI template data accumulating section 40 accumulates pieces of UI template data in advance and supplies a piece of UI template data of a UI template selected by the UI template selecting section 20, to the UI template selecting section 20.

The UI description generating section 50 generates a UI description by embedding, in the piece of UI template data received from the UI template selecting section 20, a text string(s) and an icon image identifier(s) included in the piece of service description data received from the service description data accumulating section 10, and supplies the UI description to the UI description executing section 60.

The UI description executing section 60 interprets the UI description received from the UI description generating section 50 and presents a designated text string(s) and graphic(s), and an icon image(s) acquired from the icon image accumulating section 70 to the user via the output section 90. Further, the UI description executing section 60 receives a service selection instruction from the user via the input section 80, and executes a selected service. In this way, the UI description executing section 60 realizes a user interface.

The icon image accumulating section 70 preliminarily accumulates images of icons to be displayed on a screen as part of the user interface. The icon image accumulating section 70 supplies, to the UI description executing section 60, an icon image requested from the UI description executing section 60.

The input section 80 supplies an input as the user interface, received from the user, to the UI description executing section 60. The input section 80 is realized by, for example, a keyboard, a cursor key, a touch screen, or the like.

The output section 90 presents, to the user, an output as the user interface, received from the UI description executing section 60. The output section 90 is realized by, for example, a liquid crystal display.

### <Arrangement of Mobile Terminal (External Data Acquisition)>

Fig. 2 is a functional block diagram of a mobile terminal 1b according to the present embodiment. The mobile terminal 1b is arranged so as to carry out data acquisition from an outside via a network.

The following deals with only an additional part that is added to the arrangement of the mobile terminal 1a.

The mobile terminal 1b includes, in addition to the arrangement of the mobile terminal 1a: a service description data acquisition section 11 (service description data acquisition means); a UI template data acquisition section 41 (user interface template data acquisition means); an icon image acquisition section 71; and a communication section 100 (communication means).

The service description data acquisition section 11 acquires a piece of service description data from a service description data server (not shown) via the communication section 100, and supplies the piece of service description data to the service description data accumulating section 10b.

The UI template data acquisition section 41 acquires a piece of UI template data from a UI template data server (not shown) via the communication section 100, and supplies the piece of UI template data to the UI template data accumulating section 40b.

The icon image acquisition section 71 acquires an icon image from an icon image server (not shown) via the communication section 100, and supplies the icon image to the icon image accumulating section 70b.

The communication section 100 communicates with the UI template data server that supplies UI template data, the service description data server that supplies service description data, and the icon image server that supplies an icon image, so as to receive UI template data, service description data, and an icon image from the respective servers.

### <Appearance of Mobile Terminal>

Fig. 3 schematically illustrates an exemplary appearance of a mobile terminal.
(a) of Fig. 3 is an exemplary appearance of a mobile terminal in a usable state in which a retractable keyboard 2 (input means) is unfolded. The keyboard 2 receives a key input (text input or cursor input) from a user. Separately from the keyboard 2, a display orientation change key 3 for changing a display orientation of a screen is provided. With the use of the display orientation change key 3, the user changes a user interface displayed on a screen 4 to a user interface suited to a portrait screen or a landscape screen. The screen 4 displays an output as a user interface thereon and includes a touch screen 5 (input means) so as to receive a user input.
(b) of Fig. 3 is an exemplary appearance of the mobile terminal in which the keyboard 2 is housed. Since the keyboard 2 is housed, a keyboard input cannot be carried out and only an input via the touch screen 5 can be carried out.

### <Operation Procedure of Mobile Terminal>

Fig. 4 is a flowchart of a process procedure of the mobile terminal until the mobile terminal selects UI template data, generates a UI description, and executes the UI description thus generated.

Initially, the UI template selecting section 20 acquires a piece of service description data related to a service(s) to be utilized by the user, from the service description data accumulating section 10 (Step S1, hereinafter just referred to S1). The service description data accumulating section 10 may supply a piece of service description data that has been accumulated therein in advance or a piece of service description data that is acquired from the service description data server via the service description data acquisition section 11.

Then, the UI template selecting section 20 analyzes thus acquired piece of service description data so as to figure out the number of the service(s) contained in the piece of service description data and a type(s) of the service(s) contained in the piece of service description data (S2).

The UI template selecting section 20 then acquires terminal data in which a state of the mobile terminal at the time is stored, from the terminal data acquisition section 30 (S3).

Subsequently, the UI template selecting section 20 (i) selects an optimal UI template as a user interface, based on the number and type(s) of the service(s) and the terminal data, (ii) acquires a corresponding piece of UI template data of the UI template thus selected, from the UI template data accumulating section 40, and (iii) supplies the corresponding piece of UI template data thus acquired, to the UI description generating section 50 (S4). The UI template data accumulating section 40 may supply a piece of UI template data that has been accumulated in advance or a piece of UI template data that is acquired from the UI template data server via the UI template data acquisition section 41.

Subsequently, the UI description generating section 50 (i) embeds, in the piece of UI template data thus acquired from the UI template selecting section 20, a text string(s) and an icon image identifier(s) each indicative of a place from which an icon image is to be acquired, each specified by the piece of service description data thus acquired from the service description data accumulating section 10, so as to generate a UI description, and (ii) supplies the UI description thus generated to the UI description executing section 60 (S5).

Then, the UI description executing section 60 (i) interprets and executes thus received UI description, (ii) acquires a necessary icon image(s) from the icon image accumulating section 70, based on the icon image identifier(s), and (iii) embeds the icon image(s) into a user interface, thereby realizing the user interface (S6).

### <Arrangement for Storing UI Description>

The aforementioned explanation deals with how to generate a UI description when the user is to utilize a service(s). Besides the aforementioned case, the arrangement may be such that the UI description generated when the user firstly utilized the service(s) is stored, and thus stored UI description is reused when the user utilizes the service(s) again.

### <Packaging of UI Template Data and Icon Image>

The aforementioned explanation deals with the arrangement in which the UI template data acquisition section 41 and the icon image acquisition section 71 acquire a piece of UI template data and an icon image(s), respectively, from the UI template data server and the icon image server.

In addition to the above arrangement, such an arrangement may be also possible that a piece of UI template data and an icon image(s) to be referred in a UI description generated from the piece of UI template data are packaged as a set. In this case, the mobile terminal 1b includes a package acquisition section (package acquisition means, not shown) that (i) acquires, via the communication section 100, the package from a package server (not shown) that supplies a package, (ii) extracts the piece of UI template data and the icon image(s) from the package, and (iii) supplies the piece of UI template data and the icon image(s) to the UI template data accumulating section 40b and the icon image accumulating section 70, respectively.

That is, the package is a single piece of archive data including a piece of UI template data and a piece(s) of icon image data. In the mobile terminal 1b, the package acquisition section decompresses the archive data to extract the piece of UI template data and the icon image(s), and supplies the piece of UI template data to the UI template data accumulating section 40b and the icon image(s) to the icon image accumulating section 70b.

Fig. 5 schematically illustrates an exemplary package of a piece of UI template data 501 and pieces of icon image data 502.

### <Application to Application Activation Menu>

The following deals with an example in which the present embodiment is applied to an application activation menu.

### <Change of UI Template Data According to the Number of Services>

The following deals with a user interface, as an example, in which icons indicative of applications as services are aligned in a grid pattern. In the example explained here, the number of pages of the user interface is adjusted in accordance with the number of services described in service description data.

Fig. 6 illustrates an exemplary screen display of a grid type interface. A piece of UI template data that generates the user interface illustrated in Fig. 6 is selected in a case where a keyboard is housed and a landscape screen display is carried out.

Each icon 6 is an icon for activating an application related to the icon. The user can activate an intended application by touching a corresponding icon 6.
(a) of Fig. 6 illustrates an exemplary display in which the number of services described in a piece of service description data, that is, the number of icons indicative of applications as the services is 10.
   In a case where the number of applications is not more than 12, a piece of UI template data in which icons are to be embedded in a 4x3 grid (4 icons across, 3 icons going down) per page is selected so as to generate a user interface.
(b) of Fig. 6 is an exemplary display in which the number of applications described in a piece of service description data is 15.
   In a case where the number of applications is not less than 13 but not more than 22, 2 pieces (i.e., 2 pages) of UI template data in each of which icons are to be embedded in a 4x3 grid (4 icons across, 3 icons going down; a part corresponding to one icon on the bottom-right corner is blank) is selected so as to generate a user interface.
   The exemplary display illustrated in (b) of Fig. 6 is a first page in the 2 pages. In a region on the bottom-right corner on the page, an icon 601 for page migration and a page number 602 are displayed. When the user touches the icon 601 for page migration, the first page on the user interface is changed to a second page and 12th through 15th icons are displayed. Hereby, the user can activate respective applications related to the 12th through 15th icons.
(c) of Fig. 6 illustrates an exemplary display in which the number of applications described in a piece of service description data is 26.
   In a case where the number of applications is not less than 23 but not more than 33, 3 pieces (i.e., 3 pages) of UI template data in each of which icons are to be embedded in a 4x3 grid (4 icons across, 3 icons going down; a part corresponding to one icon on the bottom-right corner is blank) is selected so as to generate a user interface.

The exemplary display illustrated in (c) of Fig. 6 is a second page in the 3 pages. In a region on the bottom-right corner on the page, icons 601 and 603 for page migration and a page number 602 are displayed.

As such, a corresponding piece of UI template data is selected in accordance with the number of services described in a piece of service description data, and respective pieces of UI template data are different from each other in display of a total page number, a page number, and an icon for page migration. As a result, it is possible to generate an easy-to-use user interface appropriate for the number of services.

That is, a piece of user interface template data in which a presentation position(s), on the screen, of a service(s) to be presented is/are appropriately adjusted is selected in accordance with the number of services. On this account, even in a case where the number of services is changed, the user can change icons to be displayed, e.g., scroll the icons, by means of pressing a cursor key or the like user input, so that the icons are displayed at suitable positions on the screen.

Further, in a case where animated motions are added to the icons in displaying, a piece of UI template data having icon animations suited to the number of services described in a piece of service description data is selected. Hereby, it is also possible to generate an easier-to-use user interface appropriate for the number of services.

### <Change of UI Template Data according to Aspect Ratio of Screen>

The following deals with an example in which a layout of a user interface is adjusted in accordance with an aspect ratio of a screen indicated by terminal data.

Fig. 7 illustrates an exemplary screen display of a grid type interface. A piece of UI template data that generates the user interface illustrated in Fig. 7 is selected in a case where a keyboard is housed and the number of services described in service description data is 10.
(a) of Fig. 7 illustrates an exemplary display in which terminal data indicates that an aspect ratio of a screen 4 is, for example, 9:16, that is, a landscape screen display is carried out.
   In the case of the landscape screen display, icons 6 are embedded in UI template data in a 4x3 grid (4 icons across, 3 icons going down) so as to display a user interface.
(b) of Fig. 7 illustrates an exemplary display in which terminal data indicates that the aspect ratio of the screen 4 is, for example, 16:9, that is, a portrait screen display is carried out.

In the case of the portrait screen display, icons 6 are embedded in UI template data in a 3x4 grid (3 icons across, 4 icons going down) so as to display a user interface.

As such, a corresponding piece of UI template data is selected in accordance with the aspect ratio of the screen 4 on which the user interface is to be displayed, and respective pieces of UI template data have a different layout of icons from each other. Hereby, it is possible to generate an easy-to-use user interface appropriate for the aspect ratio of the screen.

Further, the user interface template data may be selected, for example, in such a manner that (i) a screen mode is determined such that the screen is identified as a landscape screen when the aspect ratio of the screen is 9:16, 3:4, or 3:5 and the screen is identified as a portrait screen when the aspect ratio of the screen is 16:9, 4:3, or 5:3, (ii) a downward orientation of the screen is also determined by detecting inclination of the screen, and (iii) a piece of user interface template data that exhibits an optimal layout for the screen is selected in accordance with the identified screen mode and the downward orientation of the screen. In this case, a corresponding piece of user interface template data is selected based on the aspect ratio and the orientation of the screen, thereby making it possible to generate a user interface most suited to the aspect ratio and the orientation of the screen.

### <Change of UI Template Data according to Unfolded/ Housed State of Keyboard>

The following deals with, as an example, a scroll type user interface in which icons indicative of applications are sequentially scrolled in accordance with user instruction. The example explained here is one in which it is changed whether a user interface uses a keyboard input or not, in accordance with a housed/unfolded state of the keyboard.

Fig. 8 illustrates an exemplary screen display of a scroll type interface. A piece of UI template data that generates the user interface illustrated in Fig. 8 is selected in a case where a keyboard is unfolded and a landscape screen display is carried out.

Each icon 6 is an icon for activating an application related to the icon.

Further, a service name 8 is a name of an application related to an icon displayed in the center of a screen 4, that is, an icon placed in a focus frame.

In this user interface, the icon 6 is scrolled in an up-and-down direction in response to a user operation with respect to up and down cursor keys of a keyboard 2. When the user presses an enter key, an application related to an icon placed in the focus frame at the time is activated.
(a) of Fig. 8 illustrates an exemplary display in which the number of services described in a piece of service description data is 1. In this example, an only icon is displayed in the center of the screen. Even when the up and down cursors on the keyboard are operated, the icon thus displayed is not scrolled and animation to be displayed by deforming the icon is executed at the position so as to show that the operation of the up and down cursors was detected.
(b) of Fig. 8 illustrates an exemplary display in which the number of services described in a piece of service description data is 4. In this example, 4 icons are display in total such that one icon is positioned in a focus frame at the center of the screen, two icons are positioned above the icon in the focus frame and one icon is positioned below the icon in the focus frame. When the up and down cursor keys on the keyboard are operated, the 4 icons scroll up and down accordingly within the range from a display state in which 3 icons are positioned above the center focus frame to a display state in which 3 icons are positioned below the center focus frame.
(c) of Fig. 8 illustrates an exemplary display in which the number of services described in a piece of service description data is 15. In this example, 7 icons are displayed in total such that one icon is positioned in a focus frame at the center of the screen, 3 icons are positioned above the icon in the focus frame, and 3 icons are positioned below the icon in the focus frame. Remaining 8 icons are not displayed on the screen.

When the up and down cursor keys on the keyboard are operated, the 15 icons scroll up and down accordingly in such a manner that 7 icons are displayed in total such that one icon is positioned in the center focus frame and 3 icons are positioned on either of upper and down sides of the icon in the center focus frame. More specifically, when the icons scroll down, an icon that has not been displayed is displayed as an uppermost icon on the screen whereas a lowermost icon that has been displayed on the screen becomes non-displayed. When the icons scroll up, icons to be displayed on the screen are changed in a reverse manner to the case of down-scroll of the icons.

By repeating the cursor operation, icons that have not been displayed are sequentially displayed, so that an icon related to an intended application can be displayed on the screen and the intended application can be activated.

As such, in the case where the keyboard is used, a piece of UI template data to which a keyboard input is usable is selected, thereby resulting in that an easier-to-use user interface can be generated in accordance with whether the keyboard is housed or unfolded.

### <Change of UI Template Data according to Whether Additional Information is Added or Not>

The following deals with an example in which a user interface is changed over from a state in which additional information is displayed to a state in which no additional information is displayed, or vice versa, in accordance with whether or not additional information is described in a piece of service description data.

Fig. 9 illustrates an exemplary screen display of a grid type interface on which additional information is displayed. A piece of UI template data that generates the user interface illustrated in Fig. 9 is selected in a case where a keyboard is unfolded, a landscape screen display is carried out, and the number of services described in a piece of service description data is 1.

An icon 6 is an icon for activating an application related to the icon. The user can activate an intended application by touching the icon 6.

Further, an additional information display region 7 is a region into which a text string that is a detailed explanation of the service described in the piece of service description data is to be embedded.

As such, in the case where the number of services described in the piece of service description data is small, a piece of UI template data that allows additional information to be displayed in a blank region on the screen 4 is selected so that an easier-to-use user interface can be generated.

### <Supplemental Matters>

The present embodiment dealt with the arrangement in which the UI template selecting section 20 selects a piece of UI template data in accordance with predetermined rules. In addition to the arrangement, such an arrangement may be also possible that the UI template selecting section 20 additionally obtains a selection rule script in which rules about selecting UI template data are described and the UI template selecting section 20 selects a piece of UI template data in accordance with the selection rules described in the selection rule script.

Further, the present embodiment dealt with the arrangement in which a piece of UI template data is selected in accordance with the number of services described in a single piece of service description data. However, the present embodiment is not limited to the arrangement. Such an arrangement may be also possible that a piece of UI template data is selected in accordance with the number of services described in each of plural pieces of service description data.

Moreover, the present embodiment dealt with the arrangement in which a piece of UI template data is selected in accordance with the number of services described in a piece of service description data. However, in addition to the arrangement, such an arrangement may be also possible that the UI template selecting section 20 selects a piece of UI template data in accordance with a size of an icon image to be displayed, which icon image is obtained in accordance with an icon image identifier specified by a piece of service description data. For example, a piece of service description data may further include a reference to icon image data related to a service so that the UI template selecting section 20 selects a corresponding piece of UI template data in accordance with a width and a height of the icon image data referred by the piece of service description data. In this case, the mobile terminal 1a can generate a user interface on which an icon image is displayed with an appropriate size.

Further, such an arrangement may be also possible that the UI template selecting section 20 selects a piece of UI template data based on a length of a text string specified by a piece of service description data. In this case, the mobile terminal 1a can generate a user interface on which the text string contained in the piece of service description data is displayed in an optimal form.

### [Second Embodiment]

The present embodiment describes, as one exemplary embodiment of a user interface generator, a mobile terminal that obtains a second piece of service description data in a case where the number of services described in a piece of service description data is not less than a predetermined number.

An arrangement and an appearance of the mobile terminal of the present embodiment are the same as those in the first embodiment, and therefore will not described here.

### <Process Procedure of Mobile Terminal>

Fig. 10 is a flowchart of a process procedure of the mobile terminal until the mobile terminal selects UI template data, generates a UI description, and executes the UI description thus generated.

Initially, a UI template selecting section 20 acquires a piece of service description data related to a service(s) to be utilized by a user, from a service description data accumulating section 10 (S1).

Then, the UI template selecting section 20 analyzes the piece of service description data thus acquired so as to figure out the number services contained in the piece of service description data and a type(s) of the service(s) contained in the piece of service description data (S2).

The UI template selecting section 20 determines whether or not the number of services is more than a predetermined number (S11).

In a case where the number of services is not less than the predetermined number, the process proceeds to S3.

In a case where the number of services is less than the predetermined number, the process proceeds to S12.

In the case where the number of services is less than the predetermined number, the UI template selecting section 20 acquires a second piece of service description data from the service description data accumulating section 10 (S12).

The UI template selecting section 20, then, acquires terminal data in which a state of the mobile terminal at the time is stored, from a terminal data acquisition section 30 (S3).

Subsequently, the UI template selecting section 20 selects an optimal UI template as a user interface, based on the number and type(s) of the service(s) in the piece(s) of service description data and the terminal data, (ii) acquires a corresponding piece of UI template data of the UI template thus selected, and (iii) supplies the piece of UI template data to a UI description generating section 50 (S4).

After that, the UI description generating section 50 embeds, into the piece of UI template data received from the UI template selecting section 20, (a) a text string(s) and an icon image identifier(s) each indicative of a destination from which an icon image is to be acquired, each specified by the piece of service description data obtained from the service description data accumulating section 10, and (b) a text string(s) and an icon image identifier(s), each specified by the second piece of service description data, so as to generate a UI description, and supplies the UI description to a UI description executing section 60 (S5b).

Finally, the UI description executing section 60 (i) interprets and executes the UI description thus received, (ii) acquires necessary icon images from an icon image accumulating section 70, based on the icon image identifiers, and (iii) embeds the icon images in a user interface, thereby realizing the user interface (S6).

### <Application to Application Activation Menu>

The following deals with an example in which the present embodiment is applied to an application activation menu.

### <Change of UI Template Data According to Number of Services>

The following deals with a user interface, as an example, in which icons are aligned in a grid pattern. In the example explained here, in a case where the number of services described in a piece of service description data is not more than a predetermined number, information described in a second piece of service description data is displayed on the user interface.

Fig. 11 illustrates an exemplary screen display of a grid type interface on which information described in the second piece of service description data is displayed. A piece of UI template data that generates the user interface illustrated in Fig. 11 is selected in a case where a keyboard is unfolded, a landscape screen display is carried out, and only one service is described in the piece of service description data.

An icon 6 is an icon for activating an application related to the icon. The user can activate an intended application by touching the icon 6.

Further, a region 7 in which information described in the second piece of service description data is to be displayed is a region into which a text string for detailed explanation about a service described in the second piece of service description data and an icon referred from the icon image identifier of the second piece of service description data are to be embedded. The second piece of service description data is additionally acquired because only one service is described in the piece of service description data.

As such, in the case where the number of services described in the piece of service description data is not more than a predetermined number, a piece of UI template data that allows the information described in the second piece of service description data to be additionally displayed in a blank region on the screen is selected, thereby generating a user interface that can exhibit additional information.

### <Supplemental Matters>

The present embodiment deals with the example in which the user interface generator is realized as the mobile terminal. However, in addition to that, the user interface generator may be realized, for example, as a digital appliance such as a television receiver.

Further, the user interface generator may not be necessarily included in a terminal device itself that the user utilizes. For example, such an arrangement may be also possible that a user interface generator that generates an interface of a mobile terminal that the user utilizes is provided, as a server on a network, separately from the mobile terminal and works in that state.

This arrangement is shown in Fig. 12. A mobile terminal 120 in Fig. 12 is provided in a mobile phone network (not shown), and acquires various pieces of data from a user interface generation server 124 via the Internet 128.

The user interface generation server 124 includes a service description data accumulating section 10, a UI template selecting section 20 (selecting means), a terminal data acquisition section 30, a UI template data accumulating section 40, a UI description generating section 50 (user interface generating means), an icon image accumulating section 70, and a communication section 126.

On the other hand, the mobile terminal 120 includes a UI description executing section 60, an input section 80 (input means), an output section 90, and a communication section 122.

The communication section 122 of the mobile terminal 120 transmits terminal data to the user interface generation server 124 via the Internet 128. The communication section 126 receives the terminal data and sends the terminal data to the terminal data acquisition section 30. Thus, the terminal data acquisition section 30 acquires the terminal data from the mobile terminal 120.

On the other hand, the communication section 126 of the user interface generation server 124 acquires icon data from the icon image accumulating section 70 and also acquires a UI description from the UI description generating section 50. The icon data and UI description thus acquired are transmitted to the mobile terminal 120 via the Internet 128. In the mobile terminal 120, the communication section 122 receives the icon data and UI description thus transmitted and sends them to the UI description executing section 60.

Other processes, except for the above processes, carried out by these sections are not substantially different from those explained in the aforementioned embodiments. For this reason, detailed description of the other processes will not be explained here.

As such, even in the arrangement in which the mobile terminal is not physically integrated with the user interface generation server, it is also possible to obtain the advantages of the present invention similarly in the case where they are integrated.

Further, a technique similar to the present invention is disclosed in International Publication (WO 2007/026845). This conventional technique is such that a user interface via which functions and services of an appliance are utilized is generated by embedding input data into template data. Further, in accordance with generation rules that defines an editing operation with respect to the template data, part of the template data is copied according to the number of pieces of input data such as icon images, so as to increase portions to be replaced, and the portions to be replaced are replaced with the pieces of input data, thereby generating data defining the user interface. This allows flexible generation of the user interface in which the number of pieces of input data varies.

There is a similarity between this conventional technique and the present invention, but also there is an obvious difference between them. Specifically, the present invention is similar to the conventional technique in that part of the template data is replaced with input data to generate a description defining the user interface. On the other hand, the present invention is clearly different from the conventional technique in that a template optimal for generating the user interface is automatically selected in accordance with various conditions such as the number of pieces of input data, an aspect ratio of a screen of the terminal, an input mode of the terminal, and the like. The difference allows the present invention to cause a more advantageous effect than the conventional technique.

The present invention is not limited to the description of the embodiments above, but may be altered by a skilled person within the scope of the claims. An embodiment based on a proper combination of technical means disclosed in different embodiments is encompassed in the technical scope of the present invention.

Finally, the blocks of the user interface generator, especially, the UI template selecting section 20, the UI description generating section 50, and the UI description executing section 60, may be realized by way of hardware or software as executed by a CPU as follows.

The user interface generator includes a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. The objective of the present invention can also be achieved by mounting, to the user interface generator, a computer-readable storage medium containing control program code (executable program, intermediate code program, or source program) for the user interface generator, which is software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The user interface generator may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth (Registered Trademark), 802.11 wireless, HDR, mobile telephone network, satellite line, or terrestrial digital network. The present invention encompasses a carrier wave or data signal transmission in which the program code is embodied electronically.

As described above, a user interface generator of the present invention includes: selecting means for selecting a piece of user interface template data based on a piece of service description data describing a service(s) to be utilized by a user and terminal data indicative of a state of a terminal device that the user utilizes; and user interface generating means for generating a user interface based on the piece of service description data and the piece of user interface template data thus selected by the selecting means.

Further, as described above, a user interface generation method includes: selecting means selecting a piece of user interface template data based on a piece of service description data describing a service(s) to be utilized by a user and terminal data indicative of a state of a terminal device that the user utilizes; and user interface generating means generating a user interface based on the piece of service description data and the piece of user interface template data selected in the step of selecting.

As such, the user interface template data is selected based on content of the piece of service description data and the state of the terminal device, thereby successfully making it possible to generate a user interface most suited to the content of the piece of service description data and the state of the terminal device.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The user interface generator according to the present invention is such that a piece of user interface template data is selected based on content of a piece of service description data and a state of a terminal device so that a user interface most suited to the content of the piece of service description data and the state of the terminal device can be generated. As a result, the user interface generator of the present invention is applicable to information appliances such as a mobile terminal and a television receiver.

## Claims

1. A user interface generator that generates a user interface from a piece of user interface template data and executes the user interface, said user interface generator comprising:
selecting means for selecting a piece of user interface template data based on a piece of service description data describing a service(s) to be utilized by a user and terminal data indicative of a state of a terminal device that the user utilizes; and
user interface generating means for generating a user interface based on the piece of service described data and the piece of user interface template data thus selected by the selecting means.

2. The user interface generator as set forth in claim 1, further comprising:
communication means for communicating with an outside; and
service description data acquisition means for acquiring the piece of service description data via the communication means,
the selecting means and the user interface generating means operating based on the piece of service description data thus acquired by the service description data acquisition means.

3. The user interface generator as set forth in claim 1, further comprising:
communication means for communicating with an outside; and
user interface template data acquisition means for acquiring the piece of user interface template data via the communication means,
the user interface generating means acquiring the piece of user interface template data from the user interface template data acquisition means.

4. The user interface generator as set forth in claim 1, wherein:
the piece of service description data contains information on the number of the service(s), and
the selecting means selects a corresponding piece of user interface template data based on the information on the number of the service(s).

5. The user interface generator as set forth in claim 1, wherein:
the terminal data contains display state information of a screen on which the user interface is to be displayed, and
the selecting means selects a corresponding piece of user interface template data based on the display state information.

6. The user interface generator as set forth in claim 5, wherein:
the display state information contains an aspect ratio of the screen and an orientation of the screen.

7. The user interface generator as set forth in claim 1, further comprising input means for receiving an input of a user operation by changing how to receive the input of the user operation depending on an input mode,
the terminal data containing information on the input mode.

8. The user interface generator as set forth in claim 7, wherein:
in a case where the input mode is a key-input mode in which the user operation is carried out via a key input,
the selecting means selects a corresponding piece of user interface template data that forms a user interface that additionally presents a screen display that is helpful for the user to select a service via the key input.

9. The user interface generator as set forth in claim 1, wherein:
the service description data contains information on a type(s) of the service(s).

10. The user interface generator as set forth in claim 4, wherein:
in a case where a presentation unit for presenting the service(s) on a user interface is a page unit,
the selecting means selects a corresponding piece of user interface template data that forms a user interface having the number of pages that allows presenting all the service(s) thereon.

11. The user interface generator as set forth in claim 4, wherein:
in a case of using a user interface that changes, in response to a user input, which service(s), among the service(s) described in the piece of service description data, is/are to be displayed on a screen,
the selecting means selects a corresponding piece of user interface template data that designates a suitable presentation position of each service to be displayed on the screen, in accordance with the number of the service(s).

12. The user interface generator as set forth in claim 4, wherein:
the piece of service description data further contains an explanation(s) of the service(s), and
in a case where the number of the service(s) in the piece of service description data is not more than a predetermined number,
the selecting means selects a corresponding piece of user interface template data that forms a user interface that is capable of presenting the explanation(s).

13. The user interface generator as set forth in claim 4, wherein:
in a case where the number of the service(s) contained in the piece of service description data is not more than a predetermined number,
the selecting means acquires a second piece of service description data, and
the selecting means selects a corresponding piece of user interface template data that forms a user interface that is capable of presenting the service(s) described in the piece of service description data and a service(s) described in the second piece of service description data.

14. The user interface generator as set forth in claim 1, wherein:
the piece of service description data further contains a reference of icon image data related to each of the service(s),
the selecting means selects a corresponding piece of user interface template data in accordance with a width and a height of the icon image data referred from the piece of service description data.

15. The user interface generator as set forth in claim 1, wherein:
the selecting means selects a corresponding piece of user interface template data in accordance with a length of each text string contained in the piece of service description data.

16. The user interface generator as set forth in claim 3, further comprising package acquisition means for (i) receiving package data via the communication means, the package data containing a piece of user interface template data and a piece(s) of icon data referred from the piece of user interface template data, and for (ii) extracting the piece of user interface template data and the piece(s) of icon data from the package data.

17. An information terminal comprising a user interface generator as set forth in claim 1.

18. A user interface generation control program for causing a computer to function as each means of a user interface generator as set forth in claim 1.

19. A computer-readable storage medium in which a user interface generation control program as set forth in claim 18 is stored.

20. A user interface generation method for generating a user interface from a piece of user interface template data and for executing the user interface thus generated, said method comprising:
selecting means selecting a piece of user interface template data based on a piece of service description data describing a service(s) to be utilized by a user and terminal data indicative of a state of a terminal device that the user utilizes; and
user interface generating means generating a user interface based on the piece of service description data and the piece of user interface template data selected in the step of selecting.
